Europäisches Patentamt

European Patent Office

Office européen des brevets

(19)

(11) Numéro de publication: **0 026 134**
**B1**

(12) **FASCICULE DE BREVET EUROPEEN**

(45) Date de publication du fascicule du brevet: **02.03.83**

(21) Numéro de dépôt: **80401310.0**

(22) Date de dépôt: **12.09.80**

(51) Int. Cl.³: **G 01 S 13/44,**
**G 01 S 13/58, G 01 S 13/68**

(54) **Dispositif permettant d'accroître la résolution angulaire d'un radar Doppler aéroporté.**

(30) Priorité: **21.09.79 FR 7923595**

(43) Date de publication de la demande:
**01.04.81 Bulletin 81/13**

(45) Mention de la délivrance du brevet:
**02.03.83 Bulletin 83/9**

(84) Etats contractants désignés:
**DE GB IT**

(56) Documents cités:
**FR - A - 2 396 311**
**US - A - 3 141 164**
**US - A - 3 378 843**
**US - A - 3 618 008**
**US - A - 3 701 989**
**US - A - 4 124 849**

**IEEE TRANSACTIONS ON AEROSPACE AND
ELECTRONIC SYSTEMS, vol. AES-7. no. 5,
septembre 1971 New York US R. S.
BERKOWITZ et al.: "Information Derivable from
Monopulse Radar Measurements of Two
Unresolved Targets", pages 1011—1013.**

(73) Titulaire: **THOMSON-CSF**
**173, Boulevard Haussmann**
**F-75379 Paris Cedex 08 (FR)**

(72) Inventeur: **Gendreu, Robert**
**"THOMSON-CSF" SCPI 173, Bld. Haussmann**
**F-75360 Paris Cedex 08 (FR)**

(74) Mandataire: **Eisenbeth, Jacques Pierre et al,**
**THOMSON-CSF SCPI 173, Bld Haussmann**
**F-75379 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Dispositif permettant d'accroître la résolution angulaire d'un radar Doppler aéroporté

La présente invention est relative à un dispositif permettant d'accroître la résolution angulaire des radars Doppler et au radar Doppler comportant un tel dispositif.

La résolution angulaire des radars Doppler est, dans le cas de la détection de cibles complexes ou d'un ensemble de cibles élémentaires, limitée par une forme de bruit affectant le signal détecté résultant de la scintillation radar de la cible. De manière générale une cible complexe, telle qu'un navire ou un avion, ou un ensemble de cibles élémentaires tel qu'un raid composé de plusieurs appareils possède une pluralité de centres de réflexion pour lesquels les amplitudes et les phases des signaux réfléchis varient en fonction de la présentation de la cible et de la nature de celle-ci. Ce phénomène de scintillation connu selon le vocable anglo-saxon sous le terme de "GLINT" a pour effet d'entraîner une évolution continuelle de la direction du centre de réflexion, résultat obtenu par composition vectorielle des signaux réfléchis par les divers centres de réflexion. Cette direction peut être erronée car cette dernière peut apparaître à l'extérieur des dimensions physiques de la cible ou de l'espace occupé par le raid du fait des variations complexes des lois d'amplitude et de phase des signaux réfléchis par les différents centres de réflexion.

Dans le cas de la mise en poursuite du système radar sur la cible considérée, le radar élabore par exemple un signal somme S capté par la surface totale de l'antenne et un signal différence D résultant de la différence entre les signaux captés par deux moitiés d'antenne et figurant l'écart de dépointage de l'antenne par rapport à la cible. La mesure de dépointage ou d'écartométrie de l'antenne par rapport à la cible, obtenue par la mesure des signaux

$$\frac{D}{S}$$

est stable et précise dans le cas de poursuite de cibles ponctuelles mais cependant erronée et fluctuante dans le cas d'une cible complexe du fait, notamment, des interférences entre ondes réfléchies par les divers centres de réflexion de la cible complexe.

Différentes techniques peuvent être envisagées pour accroître la résolution des systèmes radars de poursuite. Ces techniques ont pour principe l'utilisation de signaux électromagnétiques, de très courte longueur d'onde par impulsion de très faible durée. Cependant la résolution finale reste liée aux caractéristiques géométriques de l'antenne. Le passage aux ondes électromagnétiques, optiques ou sub-optiques à très faible longueur d'onde ne peut être envisagé directement en raison des phénomènes d'absorption par l'atmosphère de l'énergie électromagnétique pour de telles longueurs d'ondes.

Une autre solution proposée dans la demande de brevet français No 77.19617 publiée sous le No 2 396 311 consiste à effectuer un traitement non linéaire du signal représentatif de l'écartométrie à partir de la probabilité estimée de l'erreur sur ces mesures, cette probabilité de l'erreur pouvant être déterminée notamment à partir des maxima du signal somme S. Une telle solution ne permet cependant pas une analyse détaillée de l'écartométrie au niveau de chaque centre de réflexion d'une cible complexe.

La présente invention permet de remédier aux inconvénients précités.

Un objet de la présente invention est la mise en oeuvre d'un dispositif permettant d'accroître la résolution angulaire des radars Doppler de poursuite de traitement du bruit de scintillation d'une cible ou d'une pluralité de cibles.

Un autre objet de la présente invention est la mise en oeuvre d'un dispositif permettant d'accroître la résolution angulaire des radars Doppler de poursuite par une analyse de l'écartométrie au niveau des centres de réflexion élémentaire de la cible.

Un autre objet de la présente invention, est la mise en oeuvre d'un dispositif capable d'assurer la détection de la rotation instantanée de la cible.

Le dispositif selon l'invention permettant d'accroître la résolution angulaire d'un radar Doppler aéroporté du type monopulse comprenant au moins une voie somme et une voie différence comporte notamment des premiers moyens de filtrage des signaux d'écho élémentaires d'une cible comprenant N voies de filtrage accordées chacune sur une fréquence

$$fk = \frac{2KVd\varepsilon}{\lambda}$$

et espacée d'un pas de fréquence

$$\Delta f = \frac{2Vd\varepsilon}{\lambda}$$

où Vd représente la vitesse de défilement radar-cible, $\lambda$ la longueur d'onde du signal radar émis, $\varepsilon$ la résolution angulaire minimale des moyens de filtrage relativement à un écho élémentaire avec K compris entre

$$-\frac{N-1}{2} \text{ et } \frac{N-1}{2}.$$

Chaque voie de filtrage délivre pour la voie somme un signal représentatif de l'amplitude d'un écho élémentaire considéré. Le dispositif selon l'invention comporte en outre des deuxièmes moyens de filtrage de signaux d'échos élémentaires d'une cible comprenant N voies de filtrage accordées chacune sur une fréquence

$$f_k = \frac{2KVd\varepsilon}{\lambda}$$

et espacées d'un pas de

$$\Delta f = \frac{2Vd}{\lambda}$$

où Vd représente la vitesse de défilement radar cible, $\varepsilon$ la résolution angulaire minimale des moyens de filtrage relativement à un écho élémentaire. Chaque voie de filtrage des deuxième moyens de filtrage délivre, pour la voie différence, un signal représentatif du produit de l'amplitude et de l'écart angulaire par rapport á l'axe radio-électrique de l'antenne d'un écho élémentaire considéré. Une boucle d'asservissement en fréquence des moyens de transposition en fréquence à une fréquence $f_o$ centrale représentative de la moyenne pondérée des fréquences de chacun des échos telle que

$$f_o = \frac{\Sigma Mk fk}{\Sigma Mk}$$

dans lesquels $f_K$ et $M_K$ représentent la fréquence Doppler d'un écho considéré et l'amplitude du signal relatif à cet écho, permet une transposition en fréquence constante des signaux d'écho. Des moyens de calcul d'écartométrie ou direction moyenne de la cible délivrent un signal égal à la moyenne des écarts angulaires de l'ensemble des échos élémentaires par rapport à l'axe radio-électrique de l'antenne.

L'invention peut être notamment utilisée dans les radars aéroportés par avion de combat ou missile, les radars utilisés dans tout type de porteur pouvant être soit des radars à impulsions à haute fréquence de répétition soit des radars à basse fréquence de répétition.

L'invention sera mieux comprise à l'aide de la description et des dessins ci-après dans lesquels:

—les figures 1a et 1b représentent un schéma synoptique du dispositif selon l'invention;

—la figure 2 représente un détail de réalisation particulier du dispositif selon la figure 1;

—les figures 3 et 4 représentent également un détail de réalisation particulier du dispositif selon l'invention;

—les figures 5a et 5b représentent un mode de réalisation particulier de l'objet de l'invention dans le cas de la détection de la rotation instantanée de la cible;

—la figure 6 représente un détail particulier de réalisation de l'objet de l'invention dans le cas de l'application du système à l'asservissement d'une antenne radar en poursuite;

—la figure 7 représente un mode de réalisation particulier conformément au mode de réalisation de la figure 6;

—la figure 8 représente un autre détail de réalisation de l'objet de l'invention.

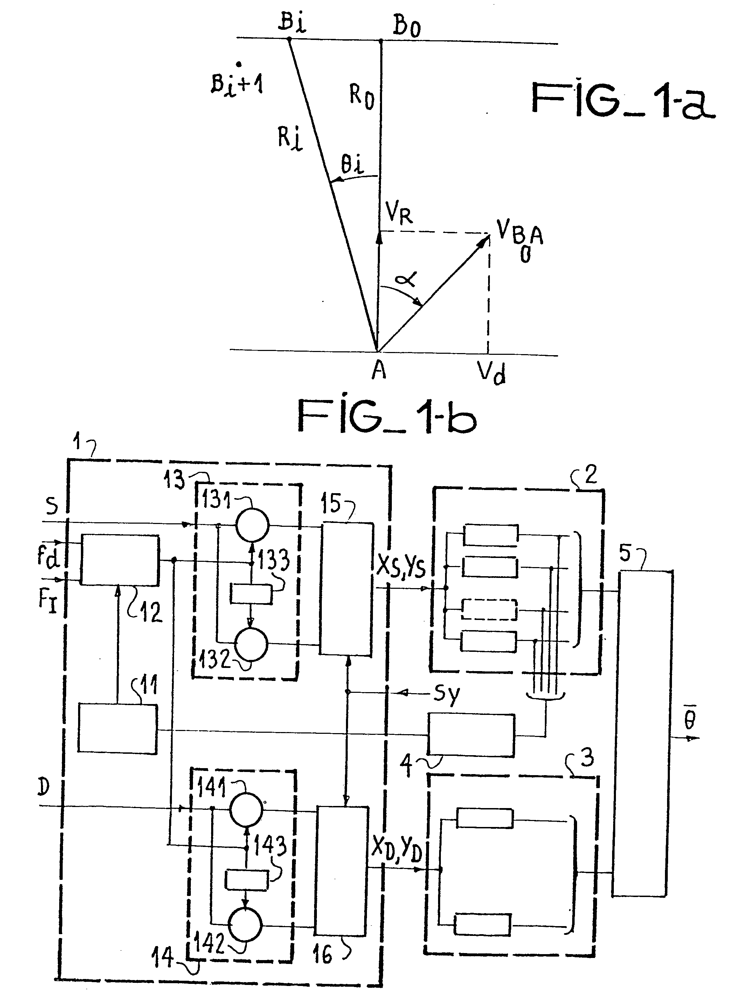

La figure 1a représente schématiquement l'antenne d'un radar de poursuite pointée sur une cible complexe. La poursuite s'effectue dans un plan, le plan de la figure, et la vitesse relative VB$_o$A du porteur par rapport à la cible est connue, elle est par exemple délivrée par le système de navigation du porteur. La cible est à titre d'exemple non limitatif supposée constituée d'un ensemble rigide de réflecteurs élémentaires ponctuels Bi dont la présentation par rapport aux ondes incidentes radar est supposée globalement invariante. Afin d'effectuer la poursuite angulaire de la cible, le radar élabore deux signaux, un signal S capté par la surface totale d'antenne, un signal D résultant de la différence entre les signaux captés séparément par deux moitiés d'antenne et figurant l'écart de dépointage de l'antenne par rapport à la cible. Le faisceau radar étant suffisamment large pour éclairer entièrement la cible, les deux signaux S et D peuvent être représentés par les relations S=$\Sigma$mi, D=$\Sigma$mi$\theta$i, les coefficients mi, $\theta$i étant respectivement proportionnels au champ réfléchi par les réflecteurs élémentaires Bi et à l'écart angulaire de ces réflecteurs Bi par rapport à l'axe du faisceau d'antenne représenté figure 1 par AB$_o$. Dans le plan des phases, les coefficients mi sont représentés par des vecteurs correspondant aux signaux élémentaires tels que mi=Mi e$^{j\phi i}$, Mi représentant la puissance reçue du réflecteur élémentaire et $\phi$i l'argument dépendant de la distance Ri=ABi du foyer de l'antenne au réflecteur Bi et de la nature de ce dernier. La contribution de celle-ci, bien qu'inconnue, est constante durant les temps d'observation pratiques et peut être négligée. En conséquence l'argument $\phi$i est limité au terme lié à la propagation des signaux radar,

$$\phi_i = \frac{4\pi Ri}{\lambda}$$

où Ri représente la distance entre le foyer de l'antenne et le point brillant Bi, $\lambda$ étant la longueur d'onde du signal d'émission. En conséquence la mesure de l'écart de la cible constituée par l'ensemble de points brillants Bi peut être représentée par le rapport des modules des vecteurs D et S soit

$$\frac{|D|}{|S|} = \frac{|\Sigma mi\theta i|}{|\Sigma mi|}$$

Compte tenu des mouvements relatifs radar cible modifiant chaque distance Ri, il existe, en conséquence, des variations imprévisibles du rapport

$$\frac{D}{S}.$$

Dans le seul cas favorable rarement obtenu où toutes les ondes sont en phase, cas où tous les $\phi i$ sont identiques, le rapport s'ecrit:

$$\frac{|D|}{|S|} = \frac{\Sigma Mi\theta i}{\Sigma Mi}$$

Ce rapport représente la moyenne pondérée en champ des écarts angulaires des différents points brillants Bi. Le point visé se trouve à l'intérieur de la cible.

Le dispositif selon l'invention permet de se ramener à un problème de poursuite ponctuelle. Il permet en particulier d'évaluer séparément les différents termes $Mi\theta i$ et $Mi$ contenus dans les signaux D et S, et permet d'obtenir une mesure des pointages moyens représentés par le barycentre radio-électrique de la cible par l'utilisation de l'effet Doppler généralement différent pour chaque réflecteur élémentaire ou point brillant Bi. En effet, les fréquences Doppler des signaux d'un écho d'un point Bi et d'un écho du point Bo, supposé situé sur l'axe ABo de l'antenne tel que représenté figure 1a, différent d'une quantité

$$\Delta f = \frac{2VBoA \cdot \sin \alpha \cdot \theta i}{\lambda} = \frac{2Vd \cdot \theta i}{\lambda}$$

où Vd représente la vitesse de défilement radar cible et $\theta i$ l'écart angulaire du point brillant Bi engendrant un écho par rapport à l'axe de l'antenne. Le dispositif selon l'invention permet donc l'obtention du dépointage moyen de la cible par séparation par filtrage des fréquences Doppler des différents points brillants. Selon la figure 1b, 1e dispositif selon l'invention, permettant d'accroître la résolution angulaire d'un radar Doppler aéroporté du type monopulse comprenant une voie somme et une voie différence, comporte des moyens de transposition en fréquence 1 des signaux d'écho des voies somme et différence. Les moyens de transposition en fréquence 1 délivrent par exemple des signaux vidéo-fréquence représentatifs de l'amplitude des échos des points brillants Bi sur la voie somme S et sur la voie différence D des signaux vidéo fréquence représentatifs du produit de l'amplitude du signal d'écho de chaque point brillant Bi et de l'écart $\theta i$ de ce point brillant par rapport à l'axe de l'antenne. Le dispositif selon l'invention comporte également des premiers moyens de filtrage des signaux d'écho élémentaires Bi d'une cible comprenant N voies de filtrage accordées chacune sur une fréquence

$$f_k = \frac{2KVd\varepsilon}{\lambda}$$

où K représente un coefficient compris entre

$$-\frac{N-1}{2} \text{ et } \frac{N-1}{2},$$

Vd représente la vitesse de défilement du radar c'est-à-dire la projection du vecteur vitesse relative radar-cible sur la direction normale à la direction radar-cible ABo, $\lambda$ la longueur d'onde d'émission des signaux radar, et $\varepsilon$ la résolution angulaire minimale des moyens de filtrage relativement à un écho élémentaire. Chaque voie de filtrage des premiers moyens de filtrage délivre pour la voie somme un signal représentatif de l'amplitude d'un écho élémentaire considéré. Le dispositif selon l'invention comporte également des deuxièmes moyens de filtrage 3 des signaux d'écho élémentaires d'une cible. Les deuxièmes moyens de filtrage 3 comprennent N voies de filtrage accordées chacune sur une fréquence

$$f_k = \frac{2KVd\varepsilon}{\lambda}$$

les fréquences de chaque voie de filtrage étant espacées d'un pas de fréquence

$$\Delta f = \frac{2Vd\varepsilon}{\lambda}$$

où Vd représente la vitesse de défilement radar cible, $\varepsilon$ la résolution angulaire minimale des moyens de filtrage relativement à un écho élémentaire. Chaque voie de filtrage des deuxièmes moyens de filtrage 3 délivre pour la voie différence un signal représentatif du produit de l'amplitude Mi et de l'écart angulaire $\theta i$ par rapport à l'axe radio-électrique de l'antenne d'un écho élémentaire considéré engendré par un point brillant Bi. Le dispositif selon l'invention représenté figure 1b comporte également une boucle d'asservissement en fréquence des moyens de transposition en fréquence á une fréquence fo centrale représentative de la moyenne pondérée des fréquences de chacun des échos. La fréquence $f_o$ est donnée par la relation.

$$f_o = \frac{\Sigma Mifi}{\Sigma Mi}$$

dans lesquels fi et Mi représentent la fréquence Doppler d'un écho considéré et l'amplitude du signal relatif à cet écho respectivement. Des moyens de calcul 5 de l'écartométrie ou direction moyenne de la cible constituée par l'ensemble des points brillants Bi délivre un signal représentatif de la moyenne des écarts angularies de l'ensemble des échos élémentaires par rapport à l'axe radio-électrique de l'antenne. Dans l'exemple de réalisation décrit ultérieurement les moyens de calcul de l'écartométrie délivrent un signal représentatif de la moyenne pondérée des écarts angularies ou écart angulaire du barycente radio-électrique de la cible. Le principe de fonction-nement du dispositif représenté figure 1a est le suivant: la fréquence Doppler de l'écho reçu du point BO situé sur l'axe de l'antenne étant compensée par la boucle d'asservissement de fréquence $f_o$, une intégration cohérente des signaux correspondant durant un temps T donne un signal égal à T alors que pour tout écho engendré par un point brillant Bi, supposé de même puissance mais de fréquence Doppler non compensée, le résultat de l'integration est de la forme:

$$\left| \int_o^T e^{j2\pi\delta FT} \cdot dt \right| = \frac{\sin\pi T\delta F}{\pi\delta F}$$

Tout écho d'un point Bi est atténué par rapport à l'écho d'un point Bo au niveau du filtre d'ordre K=0 tel que fi=fk=fo dans le rapport

$$R = \frac{\text{Sin}\pi Tfk}{\pi Tfk}$$

Une atténuation suffisante de l'écho d'un point Bi par rapport à l'écho du point Bo permet en particulier au niveau du filtre fk=fl 1a sélection de l'écho du point Bo.

Ce même traitement appliqué simultanément aux voies somme S et différence D permet d'extraire séparément les signaux élémentaires Mo et Mo$\theta$o. Le calcul d'un signal représentatif de l'écart $\theta$o de ce point par rapport à l'axe permet également pour tout point brillant d'ordre i le calcul de l'écart $\theta$i, et par suite l'obtention de la direction ou écart moyen ou même écart représentatif du bary-centre radio-électrique de la cible. Le rapport d'atténuation donné par le filtrage compte tenu de l'expression de l'écart de fréquence Doppler $\delta$F entre un point Bi et un point Bo situé sur l'axe de l'antenne s'écrit en posant L=VBoAsin$\alpha$T représentant le trajet parcouru par le centre de phsae de l'antenne normalement à la ligne de visée durant l'intégration faite par le filtre:

$$R = \frac{\sin 2\pi Lai}{\lambda Ro} \bigg/ \frac{2\pi Lai}{\lambda Ro}$$

où ai représente la distance du point brillant Bi par rapport à l'axe ABo de l'antenne ainsi que représenté figure 1a. La réponse du filtre ou atténuation du filtre en fonction de ai, distance du point brillant par rapport à l'axe de l'antenne, correspond au traitement des signaux radar fournis par une antenne synthétique d'une longueur 2L. Pour pouvoir bénéficier d'un pouvoir séparateur théorique égal à ai il est donc nécessaire que l'antenne se déplace normalement à la ligne de visée de

$$L = \frac{\lambda Ro}{2ai}$$

soit pour Ro=500 mètres, ai=1 mètre et $\lambda$=3 cm, L correspond à une antenne synthétique de 15 mètres. Cette condition est d'autant plus rapidement obtenue que la vitesse de défilement Vd est grande, la longueur L étant en première approximation L=$V_d$ . t. Selon la figure 1b, les moyens de transposition en fréquence 1 comportent un oscillateur à commande en tension 11 délivrant un signal de référence à un filtre à bande latérale unique 12. Le filtre à bande latérale unique 12 reçoit du radar les références de fréquence intermédiaire FI et de fréquence Doppler

$$fd = \frac{2Vr}{\lambda}$$

où Vr représente la vitesse radiale moyenne de la cible ainsi que représentée figure 1a. Le filtre à bande latérale unique 12 délivre un signal de transposition de fréquence

$$FI + \frac{2Vr}{\lambda}.$$

Les moyens de transposition en fréquence comportent également deux circuits de détection amplitude phase 13 et 14 comprenant chacun deux détecteurs amplitude phase 131, 132 et 141, 142 respectivement alimentés en parallèle par les voies somme S et différence D. Les détecteurs amplitude phase 131, 141 et 132, 142 reçoivent respectivement le signal de transposition de fréquence

$$FI + \frac{2Vr}{\lambda}$$

directement et par l'intermédiare d'un déphaseur de $\pi$/2 133, 143. Chaque circuit de détection amplitude phase délivre par l'intermédiaire des détecteurs amplitude phase 131, 132 et 141, 142 deux signaux vidéo fréquence représentatifs de l'amplitude et de la phase des signaux somme et différence tranposés. Des moyens d'échantillonnage 15, 16 reçoivent des circuits de détection amplitude phase des signaux vidéo fréquence et de la télémétrie radar un signal de sélection distance SY. Les moyens d'échantillonnage 15 et 16 délivrent pour chaque signal vidéo fréquence un signal échantillonné XS, YS à partir des signaux délivrés par le détecteur amplitude phase 131 et par le détecteur amplitude phase 132 et un signal échantillonné XD, YD à partir des signaux vidéo fréquence délivrés par les détecteurs amplitude phase 141, 142, les signaux échantillonnés XS, YS et XD, YD étant les composantes d'un vecteur représentatif respectivement en amplitude et phase des signaux d'écho sur la voie somme et sur la voie différence.

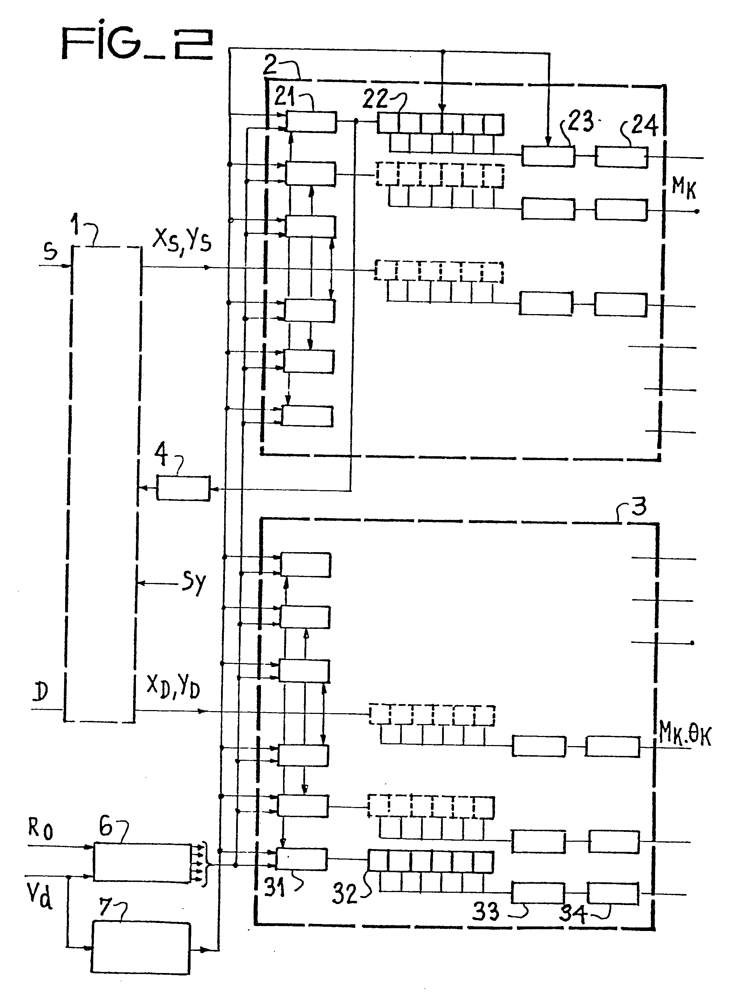

Selon un mode de réalisation particulier représenté figure 2, les premiers et deuxièmes moyens de filtrage 2 et 3 comportent une pluralité de N−1 circuits opérateurs de déphasage 21, 31 des vecteurs XS, YS, XD, YD. Sur la figure 2, les circuits opérateurs de déphasage sont notés 21 pour les premiers moyens de filtrage et 31 pour les deuxièmes moyens de filtrage, l'ordre des circuits opérateur de déphasage étant noté K pour un circuit opérateur de déphasage déterminé avec K compris entre

$$- \frac{N-1}{2} \text{ et } \frac{N-1}{2}$$

chaque circuit opérateur de déphasage d'ordre K appliquant aux vecteurs XS, YS et XD, YD un déphasage relatif:

$$\Delta\phi_k = K \cdot 2\pi \cdot \Delta f \cdot Tc$$

où f représente la bande passante de la voie de filtrage d'ordre K considéré et Tc le pas de calcul défini par

$$\frac{1}{Tc} = \frac{\lambda Ro}{4EVd}$$

dans lequel Vd représente la vitesse de défilement relative de l'avion par rapport à la cible et E/Ro le diamètre apparent de la cible. A titre d'exemple, les circuits opérateurs de déphasage 21 et 31 sont constitués par des déphaseurs numériques. Les premiers et deuxièmes moyens de filtrage 2 et 3 comportent également pour chaque voie de filtrage d'ordre K des moyens de pondération notés respectivement 22, 32 des signaux délivrés par des opérateurs de déphasage. Les moyens de pondération 22, 32 permettent une pondération sur n pas de calcul de durée Tc des signaux représentatifs des composantes XD, YD, XS, YS délivrés par les opérateurs de déphasage. A titre d'exemple les moyens de pondération 22, 32 sont constitués par un registre à décalage comportant n cases permettant la mise en mémoire des valeurs des composantes XS, YS délivrées par l'opérateur de déphasage d'ordre K et n atténuateurs élémentaires, un atténuateur élémentaire étant directement connecté à une mémoire élémentaire du registre à décalage. Les moyens de pondération 22 et 32 permettent de réduire la bande passante du filtre élémentaire équivalent constitué par l'association en cascade, pour une voie de filtrage d'ordre K, d'un circuit opérateur de déphasage d'ordre K et d'un moyen de pondération du même ordre K. La bande passante de ce filtre équivalent d'ordre K a de cette manière la valeur Δf considérée par atténuation des lobes secondaires de la fonction de transfert du filtre. Les circuits opérateur de déphasage 21 et les moyens de pondération 22 constituent pour chaque voie d'ordre K un filtre numérique ou filtre à bande latérale unique numérique corrigé au fur et à mesure du défilement relatif des points A, centre de phase de l'antenne, et Bo point d'écartométrie moyenne de la cible. Les premiers et deuxièmes moyens de filtrage 2 et 3 comportent en outre des moyens de sommation 23, 33 à chaque pas de calcul des n valeurs pondérées des signaux représentatifs des composantes XD, YD et XS, YS. Les moyens de sommation 23, 33 délivrent à chaque pas de calcul un signal filtré $XS_K$, $YS_K$ et $XD_K$, $YD_K$. Les premiers et deuxièmes moyens de filtrage comportent en outre respectivement des moyens de calcul 24, 34 d'un signal

$$MK = \sqrt{XS_K^2 + YS_K^2}$$

et d'un signal

$$M_K \cdot \theta_K = XD_K^2 + YD_K^2.$$

Les moyens de filtrage décrits sous la forme de voie de filtrage numérique ne préjugent pas du mode de réalisation de ces voies de filtrage. En particulier tout mode de réalisation comportant des bancs de filtre analogiques du type à bande latérale unique (BLU), chaque filtre étant centré sur la fréquence

$$fK = \frac{2KVd\varepsilon}{\lambda}$$

et de bande passante

$$\Delta f = \frac{2Vd\varepsilon}{\lambda}$$

ne sort pas du cadre de la présente invention. Conformément au mode de réalisation du dispositif selon l'invention représenté figure 2, la correction des bancs de filtres numériques au fur et à mesure du défilement relatif du centre de phase de l'antenne et de la cible au pas de calcul Tc est obtenue par l'intermédiaire de moyens de calcul 5 de déphasage relatif $\Delta\phi_K$ de chaque opérateur de déphasage d'ordre K et par l'intermédiaire de moyens de calcul 7 du pas de calcul Tc défini par

$$\frac{1}{Tc} = \frac{\lambda Ro}{4EVd}$$

dans lequel Vd représente la vitesse de défilement relative de l'avion par rapport à la cible et E l'envergure de la cible. A titre d'exemple les moyens de calcul du déphasage $\Delta\phi_K$ de chaque opérateur de déphasage d'ordre K sont constitués par un calculateur numérique recevant du radar les informations relatives à la vitesse de défilement cible radar et relativement à la distance Ro distance moyenne du centre de phase de l'antenne radar à la cible.

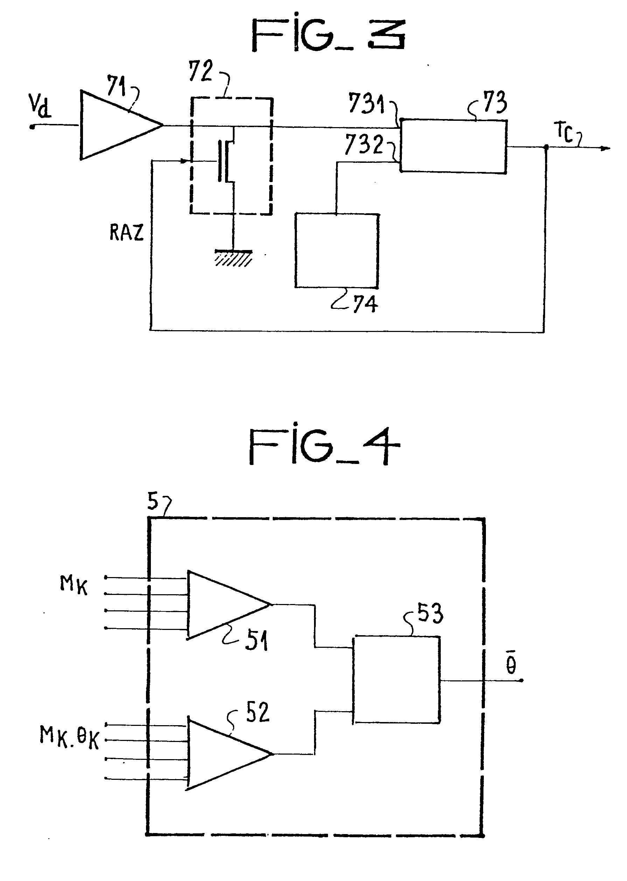

Selon le mode de réalisation particulier représenté figure 3, les moyens de calcul 5 du pas de calcul Tc comportent des moyens intégrateurs 71 recevant sur une entrée un signal représentatif de ladite vitesse de défilement Vd et délivrant par l'intermédiaire d'un circuit de remise à zéro 72 un signal intégré et des moyens comparateurs 73 recevant sur une première entrée de comparaison 731 le signal délivré par les moyens intégrateurs et sur une deuxième entrée de comparaison 732 un signal constant représentatif du pas de calcul minimal et correspondant à un pas d'avance en distance du centre de phase de l'antenne, fraction de la résolution en distance recherchée. Le signal constant est délivré par un générateur 74. Les moyens de comparaison 73 délivrent, à la coïncidence des signaux comparés soit pour

$$\int_{t}^{t+Tc} Vd \cdot dt = P$$

avec $P = \alpha'a$ où $\alpha' < 1$ et a est la résolution linéaire recherchée, une impulsion, deux impulsions successives étant séparées d'une durée égale au pas de calcul Tc. Le circuit de remise à zéro 72 constitué par exemple par un transistor à effet de champ reçoit sur une entrée de commande de remise à zéro les impulsions délivrées par les moyens de comparaison. Le comparateur 73 délivre des impulsions séparées d'une durée Tc variable en fonction de la vitesse de défilement de l'avion par rapport à la cible. Le fonctionnement du dispositif représenté figure 2 et figure 3 est le suivant: le récepteur constitué par les circuits de transposition en fréquence 1 permet d'obtenir après détection cohérente pour les deux voies somme et différence S, D les composantes X, Y des signaux somme et différence compensées de la fréquence Doppler suivant l'axe de l'antenne, la fréquence Doppler suivant l'axe de l'antenne étant fo. La boucle d'asservissement en fréquence des moyens de transposition en fréquence constituée par une boucle de phase affine cette correction. Pour chacune des voies somme et différence, les N filtres numériques sont corrigés au fur et à mesure du défilement relatif des points constitués par la cible et par le centre de phase de l'antenne. Les signaux appliqués aux deux filtres correspondants aux points brillants Bi éventuels les plus proches de l'axe de l'antenne sont affectés d'une rotation de phase élémentaire

$$\Delta\phi = \frac{4\pi \cdot Vd \cdot Tc \cdot a}{\lambda \cdot Ro}$$

Cette opération est effectuée à la cadence

$$Fc = \frac{1'}{Tc}$$

Les voies de filtrage les plus éloignées de l'axe sont soumises à des incréments

$$\frac{N-1}{2}\Delta\phi,$$

N étant le nombre des voies de filtrage. Ainsi pour un point brillant ayant la fréquence Doppler d'accord de l'une de ces voies, on trouve à la sortie de la voie de filtrage correspondante un vecteur fixe. Les composantes du vecteur sont stockées dans le registre à décalage à n cases dans lequel les informations relatives aux composantes des vecteurs XD, XS, YD, YS glissent d'une case chaque fois que le défilement du foyer d'antenne A par rapport á la cible a varié en module d'un pas d'avance P. Ce pas d'avance est calculé à partir de la vitesse de défilement Vd supposée connue. A titre d'exemple non limitatif le pas d'avance P est calculé en fonction de la résolution recherchée et de la fréquence d'échantillonnage des signaux délivrés par les détecteurs amplitude phase. Compte tenu de la condition d'échantillonnage, la fréquence d'échantillonnage devant être au moins égale à deux fois le spectre couvert par les filtres, le d'avance P s'écrit

$$P = \frac{Vd}{fs},$$

fs étant la fréquence d'échantillonnage,

$$fs = \frac{\lambda Ro}{4E}.$$

Le pas d'avance exprimé en fonction de la longueur L de l'antenne synthétique correspondante s'écrit:

$$P = \frac{a \cdot L}{2E}.$$

De plus compte tenu des relations $L = P \cdot n$, $E = (N-1)a$, E étant l'envergure couverte par les filtres, la condition entre n et N s'écrit $n = 2(N-1)$. La réalisation peut facilement être exécutée en considérant n et N comme donnés compte tenu des dispositifs à réaliser.

Selon la figure 4, les moyens de calcul 5 de l'écartométrie moyenne de la cible comportent des premiers moyens de sommation 51 des signaux Mk délivrant un signal

$$\sum_{k=-\frac{N-1}{2}}^{\frac{N-1}{2}} Mk, \text{ noté } \Sigma Mk$$

et des deuxièmes moyens de sommation, 52 des signaux MkӨk délivrant un signal résultant

$$\sum_{k=-\frac{N-1}{2}}^{\frac{N-1}{2}} Mk\theta k, \text{ noté } \Sigma Mk\theta k.$$

Les moyens de calcul 5 de l'écartométrie moyenne de la cible comportent en outre des moyens de calcul 53 du rapport

$$R=\frac{\Sigma Mk\theta k}{\Sigma Mk}$$

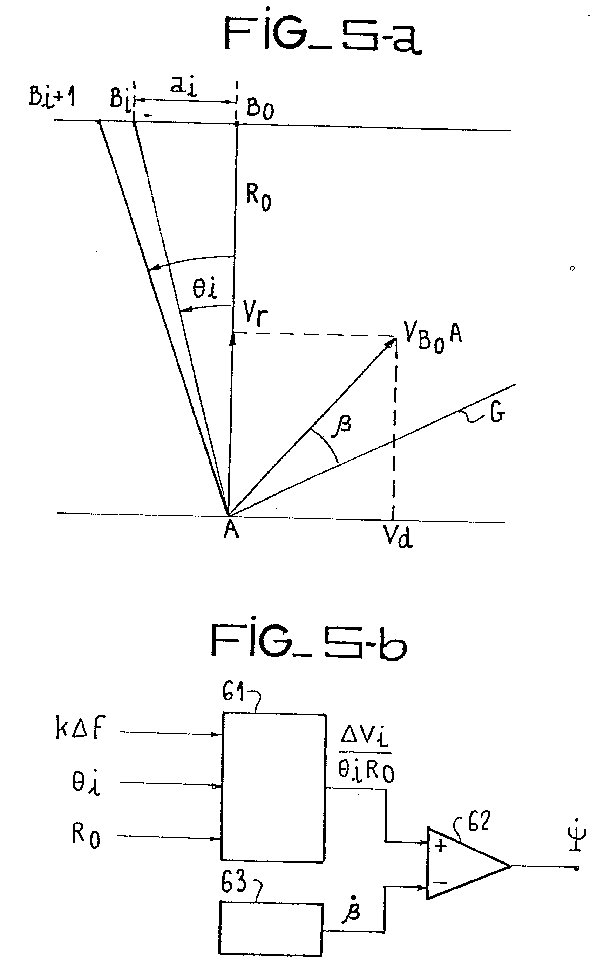

représentatif du barycentre radio électrique de la cible ou moyenne pondérée des écarts angulaires de l'ensemble des échos élémentaires par rapport à l'axe radio électrique de l'antenne. Les moyens de calcul 53 reçoivent les signaux délivrés par les moyens de sommation 51 et par les moyens de sommation 52. Tous ces circuits peuvent être constitués par des circuits numériques. La figure 5a, représente schématiquement, pour un radar muni du dispositif selon l'invention, le plan d'observation d'une cible comportant des points brillants Bi. La cible est supposée en rotation à la vitesse angulaire $\dot\psi$ dans le plan d'observation. Le point brillant Bi est supposé dans le plan d'observation sur la normale à la ligne de visée $AB_o$. La rotation de la cible $\dot\psi$ correspond, par exemple, soit à un changement de cap de la cible constituée par un aéronef ennemi, soit, par exemple, au changement de formation d'un raid au cours de son approche. Dans les deux cas, la présentation de la cible par rapport au radar, constituée par les points brillants Bi se trouve modifiée dans le plan d'observation. Le déplacement relatif de Bi étant supposé compensé en l'absence de rotation de la cible, la composante résiduelle radiale suivant ABi devient en présence de rotation $\Delta Vi = Vd\theta i + \dot\psi$ ai où ai représente la distance du point Bi à la ligne de visée $AB_o$, $\dot\psi$ la vitesse angulaire de rotation du point Bi par rapport au point $B_o$ dans le plan d'observation, Vd la vitesse de défilement radar cible et $\theta i$ l'écartométrie élaborée pour le point Bi à partir des signaux S et D. Le terme $\Delta Vi$ est donc composé du terme $Vd . \theta i$ dû au déplacement d'ensemble de la cible et du terme $\dot\psi . ai$ dû à la rotation de la cible autour d'elle même, c'est-à-dire au point Bi par rapport au point $B_o$. La quantité $\Delta Vi$ correspond à la fréquence fi=fk de la voie de filtrage accordée sur la fréquence Doppler correspondante,

$$\Delta Vi = \frac{\lambda}{2} f_k = \frac{\lambda}{2} K\Delta f.$$

$\theta k$ représente l'écartométrie élaborée à partir des signaux S et D provenant des voies de filtrage d'ordre K des premiers moyens de filtrage:

$$\theta k = \frac{Mk\theta k}{Mk}.$$

La vitesse de défilement radar cible Vd est donnée par la relation $Vd = \dot\beta Ro$ où $\dot\beta$ représente la vitesse angulaire absolue instantanée de rotation de la ligne de visée de l'antenne par rapport à un référentiel absolu G. La vitesse de rotation de la cible $\dot\psi$ s'écrit:

$$\dot\psi = \frac{\Delta Vi}{\theta k . Ro} - \dot\beta$$

avec $ai = \theta k . Rc$, Ro désignant la distance $ABo$.

La figure 5b représente schématiquement les moyens de détection de rotation de la cible. Ces moyens comprennent un circuit de calcul 61 du quotient

$$\frac{\Delta Vi}{\theta kRo}.$$

Le circuit de calcul 61 reçoit, compte tenu de l'ordre K du filtre accordé sur la fréquence Doppler du point Bi considéré, un signal représentatif de $\Delta Vi$ avec

$$\Delta Vi = K\frac{\lambda}{2}\Delta f,$$

un signal représentatif de l'écartométrie $\theta k$ du point Bi considéré et la valeur Ro représentative de la distance radar cible $AB_o$ et mesurée par le radar. Le circuit 61 est constitué par tout circuit de calcul numérique. Les moyens de détection de rotation de cible comportent également des moyens sommateurs 62 recevant sur une entrée positive le quotient

$$\frac{\Delta Vi}{\theta kRo}$$

et sur une entrée négative un signal $\dot\beta$ représentatif de la vitesse angulaire de rotation de la ligne de visée de l'antenne. Le sommateur 62 délivre un signal

$$\dot{\psi}=\frac{\Delta Vi}{\theta kRo}-\dot{\beta}$$

représentatif de la vitesse de rotation de la cible dans le plan d'observation. Un gyromètre 63 délivre le signal $\dot{\beta}$ sur l'entrée négative du sommateur 62, le signal $\dot{\beta}$ étant représentatif de la vitesse angulaire de rotation de la ligne de visée de l'antenne par rapport à un référentiel absolu G. Le mode de réalisation du dispositif selon l'invention précédemment décrit comporte un banc de N filtres de bande passante B liée à la largeur de spectre Bc de la cible par la relation

$$B=\frac{Bc}{N}.$$

Le pouvoir de résolution linéaire transversal est choisi et supposé constant ainsi que le nombre N. En conséquence la bande passante élémentaire B varie donc comme la largeur du spectre Bc de la cible. Ce type de filtre à réponse bornée temporellement introduit sur les signaux d'écartométrie traités un retard

$$\frac{1}{2B}=\frac{N}{2B_c}$$

Ce retard est acceptable pour certaines applications mais peut s'avérer gênant dans les boucles d'asservissement. La figure 6 représente un mode de réalisation particulier dans lequel l'inconvénient précité est supprimé en vue de l'application du dispositif à l'asservissement d'une antenne radar à la poursuite angulaire de cible. Selon la figure 6, les premiers et deuxièmes moyens de filtrage comportent N voies de filtrage à réponse impulsionnelle non bornée temporellement. A cet effet, chaque voie de filtrage comporte un filtre élémentaire du deuxième ordre comprenant deux cellules élémentaires 75, 77 du premier ordre en cascade de constante de temps

$$\frac{1}{b}$$

où

$$b=\frac{2\pi . Vd . a}{\lambda . Ro},$$

où Vd représente la vitesse de défilement radar cible, a la résolution linéaire transversale recherchée, c'est-à-dire la distance entre deux points brillants Bi et Bi+1 les plus proches mesurée normalement à la ligne de visée et Ro la distance radar cible, $\lambda$ la longueur d'émission du signal radar. Le découplage ainsi obtenu entre voie est de 14 décibels. Les cellules élémentaires en cascade 75 et 77 sonte séparées par un circuit séparateur 76. Ce circuit séparateur est constitué par exemple par tout circuit classique bien connu de l'homme de l'art. A titre d'exemple non limitatif, chaque cellule élémentaire comporte une résistance variable commandable en tension 750, 770 recevant un signal de commande proportionnel à

$$b=\frac{2\pi . Vd . a}{\lambda . Ro}$$

d'un générateur de tension commandable 752, 772 par l'intermédiare d'un sommateur 751, 771. Chaque cellule élémentaire a une fonction de transfert de la forme

$$\frac{1}{b+p}$$

ou p représente l'opérateur de la transformée de Laplace. L'entrée du signal à traiter se fait sur une entrée du sommateur 751.

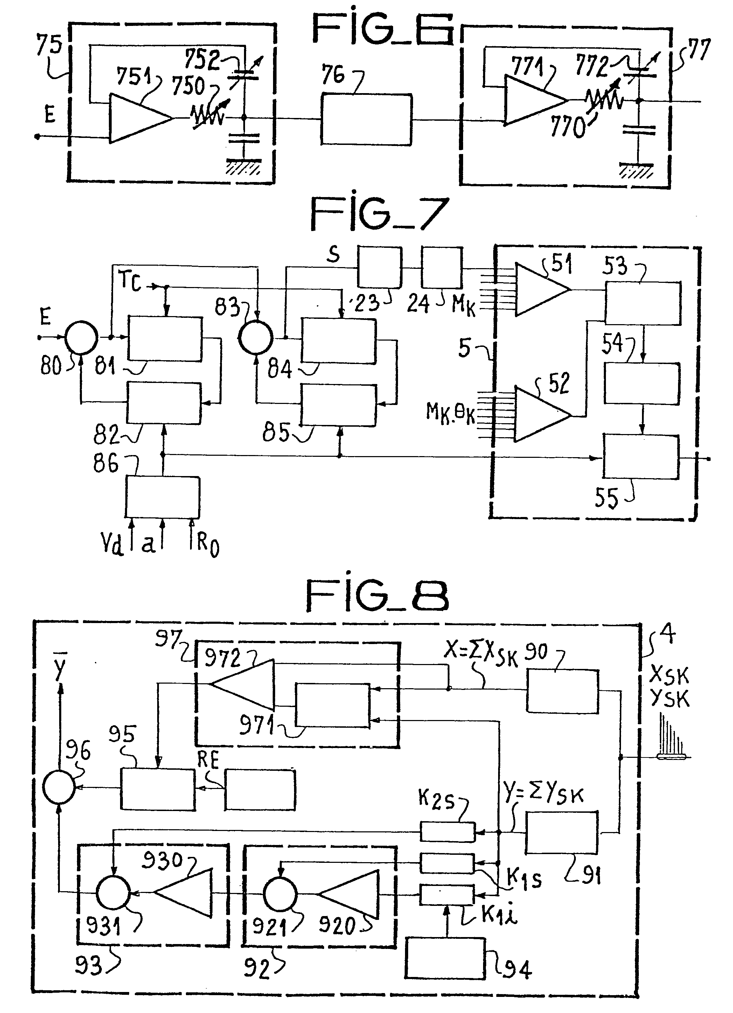

La figure 7 représente un mode de réalisation particulier en vue d'un traitement numérique des cellules élémentaires de filtrage. Chaque cellule élémentaire comporte une boucle de réaction positive comprenant un sommateur 80, 83 et un circuit atténuateur 82, 85 de gain

$$G_q=e^{-bTc} \text{ où } b=\frac{2\pi . Vd . a}{\lambda . Ro}.$$

Chaque circuit atténuateur 82, 85 reçoit respectivement du sommateur 80, 83 par l'intermédiaire d'un circuit à transfert de charge 81, 84 le signal à traiter. Chaque circuit atténuateur 82, 85 reçoit également d'un circuit de calcul 86 le paramètre b. Les paramètres Vd et a sont respectivement la vitesse de défilement radar cible et la résolution linéaire transversale recherchée. Ainsi que représenté figure 7, les moyens de calcul de l'écartométrie de la cible comportent en outre en sortie des moyens de calcul 53 du rapport

$$R=\frac{\Sigma Mk\theta k}{\Sigma Mk}$$

représentatif du barycentre radio-électrique de la cible, un filtre inverse 55 par l'intermédiaire d'un convertisseur numérique analogique 54. Le filtre inverse 55 permet de réduire le retard du dispositif au minimum, le filtre inverse ayant pour fonction de transfert:

$$F(p)=\frac{(p+b)^2}{(p+c)^2}$$

où p représente l'opérateur de Laplace et c un paramètre tel que c soit très supérieur à b. De préférence c sera c=10b. Le filtre inverse 55 permet de réduire le retard du dispositif au minimum et peut être réalisé selon les méthodes connues à l'aide de composants discrets. Le filtre inverse 55 reçoit du circuit de calcul 86 la valeur du paramètre b.

Conformément à la figure 8, les moyens d'asservissement en fréquence des moyens de transposition en fréquence à une fréquence fo centrale représentative de la moyenne pondérée des fréquences de chaque écho comprennent des moyens de sommation 90, 91 des signaux délivrés par les N voies de filtrage des premiers moyens de filtrage de la voie somme. Ces moyens de sommation délivrent pour chaque composante $XS_K$, $YS_K$, un signal X, Y représentatif d'un vecteur somme des vecteurs élémentaires délivrés par les circuits opérateur de déphasage et de composantes X=ΣXSk, Y=ΣYSk. Des moyens d'intégration comprennent en cascade une première et une deuxième cellule d'intégration élémentaire 92, 93 consituée chacune d'un intégrateur 920, 930 et d'un sommateur 921, 931. L'intégrateur 920 et le sommateur 921 et respectivement l'intégrateur 930 puis le sommateur 931 sont connectés en série. Chaque sommateur 921, 931 reçoit de plus sur une entrée le signal représentatif d'une première composante du vecteur somme délivrée par les moyens de sommation 90, 91. Sur la figure 8, à titre d'exemple non limitatif, la première composante du vecteur somme est la composante Y délivrée respectivement au sommateur 921, 931 par l'intermédiaire d'un circuit atténuateur de gain respectif K1S, K2S. L'intégrateur 920 de la première cellule d'intégration reçoit ce même signal par l'intermédiaire d'un circuit atténuateur de gain K1i déterminé. Le sommateur 931 de la deuxième cellule d'intégration délivre le signal représentatif de la composante du vecteur somme après intégration. Des moyens sommateurs 96 reçoivent d'une part un signal de recherche RE par l'intermédiaire d'un circuit d'inhibition 95 et d'autre part le signal représentatif de la composante du vecteur somme après intégration délivré par le sommateur de la deuxième cellule d'intégration. Les moyens sommateurs 96 délivrent un signal résultant à l'oscillateur local VOC commandable en tension 11. Des moyens de commande 97 du circuit d'inhibition comportent un circuit 971 de calcul du module $p$ du vecteur somme des vecteurs élémentaires tel que

$$\rho=\sqrt{X^2+Y^2}$$

et un comparateur 972 de la deuxième composante du signal somme, la composante X selon la figure 8. Le comparateur 972 reçoit la deuxième composante du signal somme et le signal représentatif du module $p$ du vecteur somme délivré par le circuit de calcul du module 971. Le comparateur 972 délivre un signal de commande du circuit d'inhibition pour une valeur de la deuxième composante du signal somme supérieur à une fraction du module $p$ soit Xs>γ . $p$ avec γ<1. Le fonctionnement de la boucle d'asservissement en fréquence 4 est le suivant: les deux composantes XS, YS des signaux de la voie somme délivrée par les deux détecteurs d'amplitude phase sont soumises aux bancs d'opérateurs de déphasage précités. En sortie de ces opérateurs, est délivré:

—un vecteur fixe d'amplitude M corespondant à un point brillant B ayant la fréquence Doppler égale à la fréquence d'accord de la voie de filtrage considérée,

—un ensemble de vecteurs tournants correspondant aux autres points brillants. Les moyens de sommation 90, 91 engendrent les composantes X=Σ$XS_K$, Y=Σ$YS_K$ d'un vecteur somme, $XS_K$ et $YS_K$ étant les composantes des vecteurs délivrés par les opérateurs de déphasage. Ce vecteur somme se présente comme la résultante d'un vecteur fixe, somme des vecteurs élémentaires délivrés par les opérateurs de déphasage, et un vecteur tournant somme des vecteurs correspondant aux autres points brillants pour lesquels la fréquence d'accord est différente de la fréquence de la voie de filtrage considérée. Les moyens d'asservissement en fréquence à la fréquence fo moyenne des fréquences des échos jouent le rôle d'une boucle de phase permettant d'obtenir un vecteur fixe dont les vecteurs composants ont des phases relatives quelconques mais constantes. Le rôle de la boucle de phase est d'annuler l'angle $\phi$, soit l'une des composantes Y par exemple. A cet effet la composante intégrée notée Y est appliquée à l'entrée de l'oscillateur 11. On a ainsi décrit un dispositif permettant l'amélioration du pouvoir de résolution angulaire de radars tels que les radars Doppler de poursuite. Toutefois le dispositif selon l'invention peut également être appliqué à l'amélioration du pouvoir séparateur angulaire des radars à haute fréquence de répétition dans la poursuite des cibles à grande distance, en particulier séparation des avions d'un raid volant de front à la même vitesse et poursuite des cibles étendues, cibles marines, cibles terrestres, et amélioration des performances des conduites de tir des missiles guidés par alignement. L'invention est également applicable à l'amélioration des performances des missiles auto-directeurs, notamment missiles auto-directeurs actifs à guidage autonome.

## Revendications

1. Dispositif permettant d'accroître la résolution angulaire d'un radar Doppler aéroporté du type monopulse, comprenant au moins une voie somme et une voie différence, caractérisé en ce qu'il comporte:

—des moyens de transposition en fréquence (1) des signaux d'écho des voies somme et différence,

—des premiers moyens de filtrage (2) des signaux d'écho élémentaires d'une cible comprenant N voies de filtrage accordées chacune sur une fréquence

$$fk = \frac{2KVd\varepsilon}{\lambda}$$

et espacées d'un pas de fréquence

$$\Delta f = \frac{2Vd\varepsilon}{\lambda}$$

où Vd représente la vitesse de défilement radar cible, $\lambda$ la longueur d'onde du signal radar émis, $\varepsilon$ la résolution angulaire minimale des moyens de filtrage relativement à un écho élémentaire, avec K compris entre

$$-\frac{N-1}{1} \quad et \quad \frac{N-1}{2}$$

chaque voie de filtrage délivrant pour la voie somme un signal représentatif de l'amplitude d'un écho élémentaire considéré,

—des deuxièmes moyens de filtrage (3) des signaux d'écho élémentaires d'une cible comprenant N voies de filtrage accordées chacune sur une fréquence

$$fk = \frac{2KVd\varepsilon}{\lambda}$$

et espacées d'un pas de fréquence

$$\Delta f = 2\frac{Vd\varepsilon}{\lambda}$$

où Vd représente la vitesse de défilement radar cible, $\varepsilon$ la résolution angulaire minimale des moyens de filtrage relativement à un écho élémentaire, chaque voie de filtrage des deuxièmes moyens de filtrage délivrant pour la voie différence un signal représentatif du produit de l'amplitude et de l'écart angulaire par rapport à l'axe radioélectrique de l'antenne d'un écho élémentaire considéré,

—une boucle d'asservissement en fréquence des moyens de transposition en fréquence à une fréquence fo centrale représentative de la moyenne pondérée des fréquences de chacun des échos

$$fo = \frac{\Sigma Mkfk}{\Sigma Mk}$$

dans lesquels fk et Mk représentent la fréquence Doppler d'un écho considéré et l'amplitude du signal relatif à cet écho,

—des moyens de calcul (5) de l'écartométrie ou direction moyenne de la cible, lesdits moyens de calcul d'écartométrie délivrant un signal égal à la moyenne des écarts angulaires de l'ensemble des échos élémentaires par rapport à l'axe radioélectrique de l'antenne.

2. Dispositif selon la revendication 1, caractérisé en ce que les moyens de transposition en fréquence comportent:

—un oscillateur à commande en tension (11) délivrant un signal de référence à un filtre à bande latérale unique (12), le filtre à bande latérale unique (12) recevant du radar les références de fréquence intermédiaire FI et de fréquence Doppler

$$fd = \frac{2Vr}{\lambda}$$

où Vr représente la vitesse radiale moyenne radar cible, ledit filtre à bande latérale unique délivrant un signal de transposition de fréquence

$$FI + \frac{2Vr}{\lambda}$$

—deux circuits de détection amplitude-phase (13—14) recevant respectivement le signal somme, le signal différence et le signal de transposition de fréquence

$$FI + \frac{2Vr}{\lambda},$$

chaque circuit de détection amplitude phase (13—14) comprenant deux détecteurs amplitude phase (131—132—141—142) alimentés en parallèle par la voie somme S ou différence D et recevant respectivement le signal de transposition et le même signal de transposition par l'intermédiaire d'un déphaseur de $\pi/2$ (133—143); et caractérisé en ce qu'il comporte en outre:

—des moyens d'échantillonnage (15—16) recevant des circuits de détection amplitude phase (13—14) les signaux vidéo fréquence, les moyens d'échantillonnage (15—16) recevant de la télémétrie radar un signal de sélection distance Sy, lesdits moyens d'échantillonnage délivrant pour chaque signal vidéo fréquence un signal échantillonné Xs, Ys et Xd, Yd composantes d'un vecteur représentatif respectivement en amplitude et phase des signaux d'écho sur la voie somme (S) et sur la voie différence (D).

3. Dispositif selon les revendications 1 et 2, caractérisé en ce que les premiers et deuxièmes moyens de filtrage comportent:

—une pluralité de N—1 circuits operateurs de déphasage (21—31) des vecteurs (Xs, Ys) (Xd, Yd), un circuit opérateur de déphasage d'ordre K avec

$$-\frac{N-1}{2} \leqslant K \leqslant \frac{N-1}{2}$$

appliquant au vecteur (Xs, Ys) (Xd, Yd) un déphasage relatif

$$\Delta\phi_k = K2\pi\Delta fTc,$$

où $\Delta f$ représente la bande passante de la voie de filtrage considérée et Tc le pas de calcul défini par

$$\frac{1}{Tc} = \frac{\lambda \cdot Ro}{4EVd}$$

dans lequel Vd représente la vitesse de défilement relative du radar par rapport à la cible et E/RO 1e diamètre apparent de la cible,

—des moyens de pondération (22—32) sur n pass de calcul de durée Tc des signaux représentatifs des composantes (Xd, Yd) (Xs, Ys) délivrés par les opérateurs de déphasage (21—31), lesdits moyens de pondération (22, 32) permettant de réduire la bande passante du filtre équivalent à la valeur $\Delta f$ considérée en atténuant les lobes secondaires de le fonction de transfert du filtre,

—des moyens de sommation (23—33) à chaque pas de calcul des n valeurs pondérées délivrant un signal filtré $(Xs)_k$ $(Ys)_k$ et $(Xd)_k$ $(Yd)_k$, et des moyens de calcul (24—34) de l'amplitude de l'écho délivrant un signal

$$Mk = \sqrt{Xs_k^2 + Ys_k^2}$$

et un signal

$$Mk \cdot \theta k = \sqrt{Xd_k^2 + Yd_k^2}$$

4. Dispositif selon la revendication 1, caractérisé en ce que les premiers et deuxièmes moyens de filtrage (2—3) son constitués par un banc de filtres analogiques du type BLU, chaque filtre étant centré sur la fréquence

$$f_k = \frac{2KVd\varepsilon}{\lambda}$$

et de bande passante

$$\frac{2Vd\varepsilon}{\lambda}.$$

5. Dispositif selon les revendications 1 à 3, caractérisé en ce qu'il comporte en outre:
—les moyens de calcul (5) du déphasage relatif $\Delta\varphi_k$ de chaque opérateur de déphasage d'ordre K,

—des moyens de calcul (7) du pas de calcul Tc défini par

$$\frac{1}{Tc} = \frac{\lambda \cdot Ro}{4EVd}$$

dans lequel Vd représente la vitesse de défilement relative de l'avion par rapport à la cible et E/Ro le diamètre apparent de la cible.

6. Dispositif selon la revendication 5, caractérisé en ce que les moyens de calcul (7) du pass de calcul Tc comportent:
—des moyens intégrateurs (71) recevant sur une entrée un signal représentatif de la vitesse de défilement Vd et délivrant par l'intermédiaire d'un circuit de remise à zéro (72) un signal intégré,
—des moyens comparateurs (73) recevant sur une première entrée de comparaison (731) le signal délivré par les moyens intégrateurs (71) et sur une deuxième entrée de comparaison (732) un signal constant représentatif du pas de calcul minimal et correspondant à un pas d'avance en distance fraction de la résolution en distance recherchée, les moyens de comparaison (73) délivrant à la coïncidence des signaux comparés soit pour

$$\int_t^{t+Tc} Vd \cdot dt = P$$

une impulsion, deux impulsions sucessives étant séparées d'une durée égale au pas du calcul Tc, le circuit de remise à zéro (72) recevant sur une entrée de commande de remise à zéro les impulsions délivrées par les moyens de comparaison (73).

7. Dispositif selon les revendications 1 à 3, caractérisé en ce que les moyens de calcul (5) de l'écartométrie moyenne de la cible comportent des premiers moyens de sommation (51) des signaux Mk délivrant un signal

$$\sum_{-\frac{N-1}{2}}^{\frac{N-1}{2}} Mk = \Sigma Mk$$

et des deuxièmes moyens de sommation (52) des signaux Mk$\theta$k délivrant un signal résultant

$$\sum_{-\frac{N-1}{2}}^{\frac{N-1}{2}} Mk \cdot \theta k = \Sigma Mk\theta k$$

et des moyens de calcul (53) du rapport

$$R=\frac{\Sigma Mk \cdot \theta k}{\Sigma Mk}$$

représentatif du barycentre radioélectrique de la cible ou moyenne pondérée des écarts angulaires de l'ensemble des échos élémentaires par rapport à l'axe radioélectrique de l'antenne.

8. Dispositif selon la revendication 7, caractérisé en ce qu'il comporte en outre des moyens de détection de la rotation de la cible comprenant:

—des moyens de calcul (61) du quotient

$$\frac{\Delta Vi}{\theta k Ro}$$

—des moyens sommateurs (62) recevant sur une entrée positive le quotient

$$\frac{\Delta Vi}{\theta k Ro}$$

et sur une entrée négative un signal $\dot{\beta}$ représentatif de la vitesse angulaire de rotation de la ligne de visée de l'antenne, les moyens sommateurs (62) délivrant un signal

$$\dot{\psi}=\frac{\Delta Vi}{\theta k Ro}-\dot{\beta}$$

représentatif de la vitesse de rotation de la cible dans le plan d'observation,

—un gyromètre (63) délivrant le signal $\dot{\beta}$ représentatif de la vitesse angulaire de rotation de la ligne de visée de l'antenne par rapport à un référentiel absolu (G).

9. Dispositif selon les revendications 1 à 3, caractérisé en ce que les premiers (2) et deuxièmes (3) moyens de filtrage comportent N voies de filtrage à réponse impulsionnelle non bornée temporellement.

10. Dispositif selon la revendication 9, caractérisé en ce que chaque voie de filtrage comporte un filtre élémentaire du deuxième ordre comprenant deux cellules élémentaires (75—77) en cascade du premier ordre de constante de temps 1/b où

$$b=\frac{2\pi \cdot Vd \cdot q}{\lambda Ro}$$

séparées par un circuit séparateur, chaque cellule élémentaire ayant une fonction de transfert de la forme

$$\frac{1}{b+p}$$

où p représente l'opérateur de la transformée de Laplace.

11. Dispositif selon la revendication 10, caractérisé en ce que chaque cellule élémentaire comporte une résistance variable (750—770) commandable en tension recevant un signal de commande proportional à

$$b=\frac{2\pi Vd \cdot a}{\lambda Ro}$$

par l'intermédiaire d'un sommateur (751—771).

12. Dispositif selon la revendication 10, caractérisé en ce que chaque cellule élémentaire comporte une boucle de réaction positive comprenant un sommateur (80—83) et un circuit (82—85) atténuateur de gain

$$G_q=e^{-bTc}$$

où

$$b=\frac{2\pi Vd \cdot a}{\lambda \cdot Ro}$$

chaque circuit atténuateur de gain recevant d'un circuit de calcul (86) le paramètre b.

13. Dispositif selon les revendications 7 et 10, caractérisé en ce que les moyens de calcul de l'écartométrie comportent en outre, en sortie des moyens (53) de calcul du rapport

$$R=\frac{\Sigma Mk\theta k}{\Sigma Mk}$$

représentatif de la cible, un filtre inverse (55) permettant de réduire le retard du dispositif au minimum, le filtre inverse ayant une fonction de transfert

$$F(p)=\frac{(p+b)^2}{(p+c)^2}$$

avec c≫b.

14. Dispositif selon les revendications 1 à 3, caractérisé en ce que les moyens d'asservissement en fréquence des moyens de transposition en fréquence à une fréquence fo centrale représentative de la moyenne pondérée des fréquences de chacun des échos comprennent:

—des moyens de sommation (90—91) des signaux délivrés par les N voies de filtrage des premiers moyens de filtrage (2) de la voie somme, ces dits moyens de sommation délivrant pour chaque composante $Xs_k$, $Ys_k$ un signal représentatif d'un vecteur somme des vecteurs élémentaires délivrés par les circuits opérateur de déphasage et de composants

$$X=\Sigma Xs_k, \quad Y=\Sigma Ys_k$$

—des moyens d'intégration comprenant en cascade une première (92) et une deuxième (93) cellule d'intégration élémentaire constituées chacune d'un intégrateur (920—930) et d'un sommateur (921—931) connectés en série, chaque sommateur (921—931) recevant de plus sur une entrée le signal représentatif d'une composante du vecteur somme délivré par les moyens de sommation (90—91) par l'intermédiaire d'un circuit atténuateur de gain respectif (K1s, K2s) déterminé et l'intégrateur (920) de la première cellule d'intégration recevant ce même signal par l'intermédiaire d'un circuit atténuateur de gain (K1i) déterminé, le sommateur (931) de la deuxième cellule d'intégration délivrant le signal représentatif de la composante du vecteur somme après intégration,

—des moyens sommateurs (96) recevant d'une part un signal de recherche par l'intermédiaire d'un circuit d'inhibition et d'autre part le signal représentatif de la composante du vecteur somme après intégration délivrée par le sommateur de la deuxième cellule d'intégration, les moyens sommateurs délivrant un signal résultant à l'oscillateur local (11) commandable en tension,

—des moyens de commande (97) du circuit d'inhibition comportant:

—des moyens de calcul du module $p$ du vecteur somme des vecteurs élémentaires tel que $p=\sqrt{X^2+Y^2}$, et des moyens de comparaison (972) de la deuxième composante du signal somme recevant le signal représentatif du module $p$ et la deuxième composante du signal somme, les moyens de comparaison (972) délivrant un signal de commande du circuit d'inhibition pour une valeur de la deuxième composante du signal somme supérieure à une fraction du module $p$.

15. Radar Doppler aéroporté comportant un dispositif selon l'une des revendications précédentes.

**Patentansprüche**

1. Vorrichtung zur Erhöhung des Winkelauflösungsvermögens eines durch ein Luftfahrzeug beförderten Monopuls-Dopplerradars mit wenigstens einem Summenkanal und einem Differenzkanal, dadurch gekennzeichnet, das sie umfasst:

—Mittel zur Frequenztransponierung (1) der Echosignale des Summenkanals und des Differenzkanals,

—erste Filtermittel (2) zum Filtern der Elementarechosignale eines Zieles, umfassend N Filterkanäle deren jeder auf eine Frequenz

$$fK=\frac{2KVd\varepsilon}{\lambda}$$

abgestimmt und um einen Frequenzteilschritt

$$\Delta f=\frac{2VD\varepsilon}{\lambda}$$

versetzt ist, wobei Vd die Radar/Ziel-Laufgeschwindigkeit, $\lambda$ die Wellenlänge des ausgesendeten Radarsignals, $\varepsilon$ die minimale Winkelresonanz der Filtermittel in bezug auf ein Elementarecho darstellt und K zwischen

$$-\frac{N-1}{1}\quad\text{und}\quad\frac{N-1}{2}\text{liegt,}$$

während jeder Filterkanal für den Summenkanal ein die Amplitude eines bestimmten Echos darstellendes Signal abgibt,

—zweite Filtermittel (3) zum Filtern der Elementarechosignale eines Zieles, umfassend N Filterkanäle deren jeder auf eine Frequenz

$$fK=\frac{2KVD\varepsilon}{\lambda}$$

abgestimmt und um einen Frequenzteilschritt

$$\Delta f=2\frac{Vd\varepsilon}{\lambda}$$

versetzt ist, wobei Vd die Radar/Ziel-Laufgeschwindigkeit un $\varepsilon$ die minimale Winkelauflösung der Filtermittel in bezug auf ein Elementarecho darstellt, und wobei jeder Filterkanal der zweiten Filtermittel für den Differenzkanal ein Signal abgibt, welches das Produkt der Amplitude und der Winkelabweichung eines bestimmten Elementarechos in bezug auf die radioelektrische Achse der Antenne darstellt,

—eine Steuerschleife, die die Frequenztransponierungsmittel in Abhängigkeit von einer Zentralfrequenz so steuern, welche den berichtigten Mittelwert der Frequenzen eines jeden Echos

$$fo=\frac{\Sigma Mkfk}{\Sigma Mk}$$

darstellt, wobei fk und Mk die Dopplerfrequenz des jeweiligen Echos und die Amplitude des diesem Echo zugeordneten Signals darstellen,

—Rechenmittel (5) zum Berechnen der mittleren Richtung oder Abweichung des Zieles, wobei diese Abweichungsberechnungsmittel ein Signal abgeben, welches dem Mittelwert der Winkelabweichungen aller Elementarechos in bezug auf die radioelektrische Achse der Antenne gleich ist.

2. Vorrichtung nach Anspruch 1, dadurch gekennzeichnet, dass die Frequenztransponierungsmittel umfassen:

—einen spannungsgesteuerten Schwingkreis (11), der ein Bezugssignal an einen Filter (12) mit einem einzigen Seitenband abgibt, wobei der Filter (12) mit einem einzigen Seitenband von dem Radar die Bezugssignale der Zwischenfrequenz Fl und der Dopplerfrequenz

$$fd=\frac{2Vr}{\lambda}$$

empfängt, wo Vr die mittlere Radar/-Ziel=Radialgeschwindigkeit darstellt, und wobei der Filter mit einem Seitenband ein Frequenztransponiersignal

$$Fl+\frac{2Vr}{\lambda}\text{ abgibt,}$$

—zwei Amplituden-Phasendetektorkreise (13—14), die das Summensignal, bzw. das Differenzsignal und das Frequenztransponierungssignal

$$Fl+\frac{2Vr}{\lambda}$$

empfangen, wobei jeder Amplituden-Phasendetektorkreis (13—14) zwei Amplituden-Phasendetektoren (131—132—141—142) besitzt, die in Parallelschaltung von dem Summen= oder Differenzkanal S oder D gespeist werden und jeweils das Transponierungssignal und das gleiche Transponierungssignal über einen Phasenverschieber $\pi/2$ (133—143) empfangen, und ferner gekennzeichnet dadurch, dass sie ebenfalls umfasst:

—Bemusterungsmittel (15—16), die von den Amplituden-Phasendetektorkreisen (13—14) die Videofrequenz-Signale empfangen, wobei die Musterungsmittel (15—16) von der Radarentfernungsmesseinrichtung ein Entfernungswählsignal Sy empfangen und die Musterungsmittel für jedes gemusterte Videofrequenzsignal Xs, Ys, und Xd, Yd abgeben, wobei diese Signale Komponenten eines Vektors sind, der die Amplitude bzw. die Phase der Echosignale im Summenkanal (S) bzw. Differenzkanal (D) darstellt.

3. Vorrichtung nach Anspruch 1 und 2, dadurch gekennzeichnet, das die ersten und zweiten Filtermittel umfassen:

—eine Mehrzahl von N—1 Phasenverschiebungskreisen (21—31) zur Phasenverschiebung der Vektoren (Xs, Ys) (Xd, Yd), wobei ein K-Phasenverschiebungskreis mit

$$-\frac{N-1}{2}\leqslant K\leqslant\frac{N-1}{2}$$

für den Vektor (Xs, Ys) (Xd, Yd) ein relative Phasenverschiebung

$$\Delta\phi_K=K2\pi\Delta fTc$$

bewirkt, wo $\Delta f$ das Passband des betreffenden Filterkanals und Tc den durch

$$\frac{1}{Tc}=\frac{\lambda\cdot Ro}{4EVd}$$

definierten Rechnungsteilschritt darstellt, worin Vd die relative Laufgeschwindigkeit des Radars in bezug auf das Ziel und E/RO den scheinbaren Durchmesser des Zieles bedeutet,

—Berichtigungsmittel (22—32) für $n$ Rechenteilschritte von einer Dauer von Tc der von den Phasenverschiebern (21—31) abgegebenen Komponenten (Xd, Yd) (Xs, Ys), vermittels welcher Berichtigungsmittel (22, 32) das Passband des äquivalenten Filters auf den betreffenden Wert $\Delta f$ reduzierbar ist, unter Dämpfung der sekundären Kurven der Transferfunktion des Filters,

—Summiermittel (23—33), die bei jedem Rechenteilschritt die $n$ berichtigten Wertes summieren und ein gefiltertes Signal $(Xs)_k$ $(Ys)_k$ und $(Xd)_k$ $(Yd)_k$ abgeben, sowie Rechenmittel (24—34) zum Berechnen der Echo-Amplitude, welche ein Signal

$$Mk=\sqrt{X_{sk}^2+Y_{sk}^2}$$

und ein Signal

$$Mk\cdot\theta k=\sqrt{Xd_k^2+Yd_k^2}$$

abgeben.

4. Vorrichtung nach Anspruch 1, dadurch gekennzeichnet, dass die ersten und zweiten Filtermittel (2—3) aus einer BLU-Analogfilter-Reiche bestehen, wobei jeder Filter auf die Frequenz

$$f_k=\frac{2KVd\varepsilon}{\lambda}$$

des Passbands

$$\frac{2Vd\varepsilon}{\lambda}$$

zentriert ist.

5. Vorrichtung nach Anspruch 1 bis 3, dadurch gekennzeichnet, das sie ferner umfasst:

—Rechenmittel (5) zum Berechnen der relativen Phasenverschiebung $\Delta\phi_k$ eines jeden eine Phasenverschiebung der Grössenordnung K bewirkendenden Phasenverschiebers,

—Rechenmittel (7) zum Berechnen des Rechenteilschritts Tc, definiert durch den Ausdruck

$$\frac{1}{Tc}=\frac{\lambda\cdot Ro}{4EVd}$$

in welchem Vd die relative Geschwindigkeit des Luftfahrzeugs in bezug auf das Ziel und E/Ro den scheinbaren Durchmesser des Ziels darstellt.

6. Vorrichtung nach Anspruch 5, dadurch gekennzeichnet, dass die Rechenmittel (7) zum Berechnen des Teilschritts Tc umfassen:

—Integrationsmittel (71), die an einem Eingang ein die Geschwindigkeit Vd darstellendes Signal empfangen und über einen Rückstellkreis (72) ein integriertes Signal abgeben,

—Vergleichermittel (73), die an einem ersten Vergleichereingang (731) das von den Integrationsmitteln (71) abgegebene Signal und an einem zweiten Vergleichereingang (732) ein konstantes Signal empfangen, welches den minimalen Rechenteilschritt darstellt und einem Bruchteil der gewünschten Abstandsauflösung gleichen Vorwärts-Abstandsteilschritt entspricht, wobei die Vergleichermittel (73) bei Übereinstimmung der verglichenen Signale, d.h. bei

$$\int_t^{t+Tc} Vd \cdot dt = P$$

eine Impulsion abgeben und zwei aufeinanderfolgende Impulsionen durch einen dem Rachenteilschritt Tc gleichen Zeitraum getrennt sind, und wobei der Rückstellkreis (72) an einem Rückstell=Steuereingang die von den Vergleichermitteln (73) abgegebenen Impulse empfangen.

7. Vorrichtung nach den Ansprüchen 1 bis 3, dadurch gekennzeichnet, dass die Rechenmittel (5) zur Berechnung des mittleren Zielabstandes erste Summiermittel (51) zum Summieren der Signale Mk aufweisen, die ein Signal

$$\int_{-\frac{N-1}{2}}^{\frac{N-1}{2}} Mk = \Sigma Mk$$

abgeben, sowie zweite Summiermittel (52) zum Summieren der Signale Mkθk, die ein resultierendes Signal

$$\int_{-\frac{N-1}{2}}^{\frac{N-1}{2}} Mk \cdot \theta k = \Sigma Mk\theta k$$

abgeben, und ferner Rechenmittel (53) zum Berechnen des Verhältnisses

$$R = \frac{\Sigma Mk\theta k}{\Sigma Mk}$$

welches das radioelektrische Schwerezentrum oder den berichtigten Mittelwert der Winkelabweichungen aller Elementarechos in bezug auf die radioelektrische Achse der Antenne darstellt.

8. Vorrichtung nach Anspruch 7, dadurch gekennzeichnet, das sie ferner Detektormittel zur Bestimmung der Drehung des Ziels aufweist, welche umfassen:

—Rechenmittel (61) zur Berechnung des Quotienten

$$\frac{\Delta Vi}{\theta kRo}$$

—Summiermittel (62), die an einem positiven Eingang den Quotienten

$$\frac{\Delta Vi}{\theta kRo}$$

und an einem negativen Eingang ein Signal $\beta$ empfangen, welches die Winkelgeschwindigkeit der Drehung der Visierlinie der Antenne empfangen, wobei die Summiermittel (62) ein Signal

$$\psi = \frac{\Delta Vi}{\theta kRo} - \beta$$

abgeben, das die Drehgeschwindigkeit des Ziels in der Beobachtungsebene darstellt,
—einen Gyrometer (63), der das die Winkelgeschwindigkeit der Drehung der Visierlinie der Antenne in bezug auf eine absolute Bezugsgrösse (G) darstellende Signal $\beta$ abgibt.

9. Vorrichtung nach den Ansprüchen 1 bis 3, dadurch gekennzeichnet, dass die ersten (2) und zweiten (3) Filtermittel N zeitlich nicht abgegrenzte Impulsantwort-Filterkanäle aufweisen.

10. Vorrichtung nach den Ansprüchen 1 bis 3, dadurch gekennzeichnet, dass jeder Filterkanal einen Elementarfilter zweiter Ordnung aufweist, der zwei in Kaskadenschaltung angeordnete Elementarzellen (75—77) erster Ordnung mit einer Zeitkonstante 1/b besitzt, wobei

$$b = \frac{2\pi \cdot Vd \cdot q}{\lambda Ro}$$

und wobei diese Elementarzellen durch einen Trennkreis getrennt sind, während jede Elementarzelle eine Transferfunktion

$$\frac{1}{b+p}$$

besitzt, wo $p$ den Operator der Laplace-Transformation darstellt.

11. Vorrichtung nach Anspruch 10, dadurch gekennzeichnet, dass jede Elementarzelle einen spannungssteuerbaren veränderlichen Widerstand (750—770) aufweist, der über einen Summieren (751—771) ein der Grösse

$$b = \frac{2\pi Vd \cdot a}{\lambda Ro}$$

proportionales Steuersignal empfängt.

12. Vorrichtung nach Anspruch 10, dadurch gekennzeichnet, dass jede Elementarzelle eine positive Rückkopplungsschleife aufweist, die einen Summierer (80—83) und einen Verstärkungsdämpfungskreis (82—85)

$$G_q = e^{-bTc}$$

$$b = \frac{2\pi Vd \cdot a}{\lambda \cdot Ro}$$

und jeder Verstärkungsdampfungskreis von einem Rechenkreis (86) den Parameter $b$ empfängt.

13. Vorrichtung nach den Ansprüchen 7 und 10, dadurch gekennzeichnet, dass die Rechenmittel zum Berechnen des Abstands ferner am Ausgang Rechenmittel (53) zum Berechne des Verhältnisses

$$R = \frac{\Sigma Mk\theta k}{\Sigma Mk}$$

aufweisen, welches das Ziel darstellt, wobei ein umgepolter Filter (55) die Verzögerung der Vorrichtung auf ein Minimum zu begrenzen gestattet und der umgepolte Filter eine Transferfunktion

$$F(p) = \frac{(p+b)^2}{(p+c)^2}$$

besitzt, wo c≫b.

14. Vorrichtung nach den Ansprüchen 1 bis 3, dadurch gekennzeichnet, dass die Frequenzsteuermittel, die die Frequenztransponierungsmittel gemäss einer den berichtigten Mittelwert der Frequenzen eines jeden Echos darstellenden Frequenz so steuern, umfassen:

—Summiermittel (90—91) zum Summieren der von den N Filterkanälen der ersten Filtermittel (2) Summierkanals abgegebenen Signale, wobei diese Summiermittel für jede Komponente $Xs_k$, $Ys_k$ ein einem Summenvektor der von den Dephasierungsoperatorkreisen abgegebenen Elementarvektoren und den Komponenten

$$X = \Sigma Xs_k, \; Y = \Sigma Ys_k$$

entsprechendes Signal abgeben,

—Integrierungsmittel mit einer ersten (92) und einer zweiten (93) Elementarintegrierungszelle, die in Kaskadenschaltung angeordnet sind und aus je einem Integrator (920—930) und einem mit diesem in Reihenschaltung verbundenen Summierer (921—931) bestehen, wobei jeder Summierer (921—931) ferner an einem Eingang das eine Komponente des über je einen bestimmten Verstärkungsdämpfungskreis (K1s, K2s) von den Summiermitteln (90—91) abgegebenen Summenvektors darstellende Signal empfängt, und wobei der Integrator der ersten Integrierungszelle das gleiche Signal über einen bestimmten Verstärkungsdämpfungskreis (K1i) und der Summierer (931) der zweiten Integrierungszelle das die Komponente des Summenvektors nach Integration darstellende Signal abgibt,

—Summiermittel (96), die einerseits über einen Untersagungskreis ein Suchsignal und andererseits das vom Summierer der zweiten Integrationszelle abgegebene, die Komponente des Summenvektors nach Integration darstellende Signal empfangen, wobei die Summiermittel ein resultierendes Signal an den spannungssteuerbaren örtlichen Schwingkreis (11) abgeben.

—während die Steuermittel (97) des Untersagungskreises umfassen:

Rechenmittel zum Berechnen des Moduls $\rho$ des Summenvektors der Elementarvektoren, derart, dass

$$\rho = \sqrt{X^2 + Y^2}$$

sowie Vergleichermittel (927) zum Vergleichen der zweiten Komponente des Summensignals, die das den Modul $\rho$ darstellende Signal und die zweite Komponente des Summensignals empfangen, wobei diese Vergleichermittel (972) ein Steuersignal zum Steuern des Untersagungskreises bei Erreichen eines Wertes abgeben, welcher höher ist, als eine Fraktion des Moduls $\rho$.

15. Durch ein Luftfahrzeug beförderter Doppler-Radar mit einer Vorrichtung nach einem der vorstehenden Ansprüche.

## Claims

1. A device for increasing the angular resolution of an airborne monopule Doppler radar, comprising at least one summing channel and one difference channel, characterized in that it comprises:

—means for frequency-transposing (1) echo signals of the summing and difference channels,

—first filtering means (2) elementary echo signals of a target, comprising N filter channels each of which is tuned to a frequency

$$fk = \frac{2KVd\varepsilon}{\lambda}$$

and which are spaced from each other by one frequency step

$$\Delta f = \frac{2Vd\varepsilon}{\lambda},$$

wherein Vd represents the radar/target passing speed, $\gamma$ the wavelength of the emitted radar signal, $\varepsilon$ the minimum angular resolution of the filtering means relative to an elementary echo, while K is comprised between

$$\frac{N-1}{1} \text{ and } \frac{N-1}{2}$$

each filtering channel delivering for the summing channel a signal representing the amplitude of a considered elementary echo,

—second filtering means (3) for filtering the elementary echo signals of a target, comprising N filtering channels tuned each one to a frequency

$$fk = \frac{2KVd\varepsilon}{\lambda}$$

and spaced from each other by one frequency step

$$\Delta f = 2\frac{Vd\varepsilon}{\lambda}$$

wherein Vd represents the radar/target passing speed, $\varepsilon$ the minimum angular resolution of the filtering means relative to an elementary echo, each filtering channel of said second filtering means delivering for each difference channel a signal representing the product of the amplitude by the angular spacing, with reference to the radioelectric axis of the antenna, of a considered echo,

—a frequency regulating loop for regulating the frequency transposing means in accordance with a central frequency for representing the weighed mean value of the frequencies of each one of the echos

$$fo = \frac{\Sigma Mkfk}{\Sigma Mk}$$

wherein fk and Mk represent the Doppler frequency of a considered echo and the amplitude of the signal relative to said echo,

—computing means (5) for computing the mean direction or spacing of the target, said spacing computing means delivering a signal equal to the mean value of the angular spacings of all the elementary echos with reference to the radioelectric axis of the antenna.

2. A device according to claim 1, characterized in that said frequency transposition means comprise:

—a voltage control oscillator (11) transmitting a reference signal to a single lateral band-filter (12) which receives from the radar the references of intermediary frequency FI and of Doppler frequency

$$fd = \frac{2Vr}{\lambda}$$

wherein Vr represents the mean radial radar/target speed, said single lateral band-filter delivering a frequency transposition signal

$$FI + \frac{2Vr}{\lambda}$$

—two amplitude-phase detection circuits (13—14) receiving respectively the summing signal, the difference signal and the frequency transposition signal

$$FI + \frac{2Vr}{\lambda}$$

each amplitude-phase detection circuit (13—14) comprising two amplitude-phase detectors (131—132—141—142) fed in parallel by the summing channel S or difference channel D, and receiving respectively the transposition signal through the intermediary of a $\pi/2$ (133—143) dephaser, said device being characterized also in that it further comprises:

sampling means (15—16) receiving from the amplitude-phase detection circuits (13—14) the video frequency signals, said sampling means (15—16) receiving from the radar telemetry a distance selection signal Sy, said sampling means delivering for each sampled video frequency signal Xs, Ys and Xd, Yd components of a vector representing respectively the amplitude and the phase of the echo signals in the summing channel (S) and the difference channel (D).

3. A device according to claims 1 and 2, characterized in that said first and second filtering means comprise:

—a plurality of N—1 dephasing operator circuits (21—31) for the vectors (Xs, Ys) (Xd, Yd), one dephasing operator circuit of the K range where

$$\frac{N-1}{2} \le K \le \frac{N-1}{2}$$

applying to the vector (Xs, Ys) (Xd, Yd) a relative dephasing

$$\Delta\phi_k = K2\pi\Delta fTc$$

where $\Delta f$ represents the passband of the considered filtering channel and Tc represents the computing step defined by

$$\frac{1}{Tc} = \frac{\lambda \cdot Ro}{4EVd}$$

wherein Vd represents the relative passing speed of the radar with reference to the target, and E/Ro represents the apparent diameter of the target,

—weighing means (22—32) for n steps of computing the duration Tc of the signals representing the components (Xd, Yd) (Xs, Ys) delivered by the dephasing operators (21—31),

said weighing means (22, 32) enabling to reduce the passband of the filter equivalent to the considered value Δf by attenuating the secondary lobes of the transfer function of the filter,

—summing means (23—33) for summing at each computing step the $n$ weighed values, and delivering a filtered signal $(Xs)_k$ $(Ys)_k$ and $(Xd)_k$ $(Yd)_k$, and computing means (24—34) for computing the echo amplitude and delivering a signal

$$Mk=\sqrt{Xs_k^2+Ys_k^2}$$

and a signal

$$Mk \cdot \theta k=\sqrt{Xd_k^2+Yd_k^2}$$

4. A device according to claim 1, characterized in that said first and second filtering means (2—3) are constituted by a row of analog BLU filters, each filter being centered on the frequency

$$f_k=\frac{2KVd\varepsilon}{\lambda}$$

and having a passband

$$\frac{2Vd\varepsilon}{\lambda}$$

5. A device according to claims 1 to 3, characterized in that it further comprises:

—the computing means (5) for computing the relative dephasing $\Delta\phi_k$ of each operator of the K range,

—computing means (7) for computing the computing step Tc defined by

$$\frac{1}{Tc} = \frac{\lambda \cdot Ro}{4EVd}$$

wherein Vd represents the relative passing speed of the airplane with respect to the target, and E/Ro represents the apparent diameter of the target.

6. A device according to claim 5, characterized in that said computing means (7) for computing the computing stem Tc comprise:

—integrating means (71) receiving at one input a signal representing the passing speed Vd and delivering, through a resetting circuit (72) and integrated signal,

—comparing means (73) receiving at a first comparing inlet (731) the signal delivered by the integrating means (71), and at a second comparing inlet (732) a constant signal representing the minimum computing step and corresponding to a distance advance step which is a fraction of the desired distance resolution, said comparing means (73) delivering, when the compared signals coincide, i.e. for

$$\int_{t}^{t+Tc} Vd \cdot dt=P$$

a pulse, two successive pulses being separated by a duration equal to the computing step Tc, the resetting circuit (72) receiving at one reset control input the pulses delivered by said comparing means (73).

7. A device according to claims 1 to 3, characterized in that said mean target spacing computing means (5) comprise first summing means (51) for summing the Mk signals, delivering a single

$$\int_{-\frac{N-1}{2}}^{\frac{N-1}{2}} Mk=\Sigma Mk$$

and second summing means (52) for summing the Mk$\phi$k signals, delivering a resulting signal

$$\int_{-\frac{N-1}{2}}^{\frac{N-1}{2}} Mk \cdot \theta k=\Sigma Mk\theta k$$

and computing means (53) for computing the ratio

$$R=\frac{\Sigma Mk \cdot \theta k}{\Sigma Mk}$$

representing the radioelectric barycenter of the target or weighed mean value of the angular spacings of all the elementary echos with reference to the radioelectric axis of the antenna.

8. A device according to claim 7, characterized in that it further comprises detection means for detecting the rotation of the target, comprising:

—computing means (61) for computing the ratio

$$\frac{\Delta Vi}{\theta kRo}$$

—summing means (62) receiving at a positive input the ratio

$$\frac{\Delta Vi}{\theta kRo}$$

—integrating means comprising, in cascade, a first (92) and second (93) elementary integrating cell, each one of said cells being constituted by an integrator (920—930) and a summing device (921—931) connected in series, each summing device (921—931) further receiving at one input the signal representing one component of the summing vector delivered by the summing means (90—91) through the intermediary of a determined respective gain attenuating circuit (K1s, K2s), and the integrator (920) of the first integrating cell receiving the said signal through the intermediary of a determined gain attenuating circuit (K1i), the summing device (931) of the said integrating cell delivering the signal representing the component of the summing vector after integration,

—summing means (96) receiving, on the one hand, a search signal through the intermediary of an inhibition circuit and, on the other hand, the signal representing the component of the summing vector after integration, as delivered by the summing device of the second integrating cell, said summing means delivering a resulting signal to a voltage-controllable local oscillator (11),

—control means (97) controlling the inhibition circuit, and comprising:

—computing means for computing the module $p$ of the summing vector of the elementary vectors, in such a manner that

$$p=\sqrt{X^2+Y^2}$$

and comparing means (972) of the second component of the summing signal, receiving the signal representing the module $p$ and the and at a negative input a signal $\beta$ representing the angular rotation speed of the sighting line of the antenna, said summing means (62) delivering a signal

$$\psi=\frac{\Delta Vi}{\theta kRo}-\beta$$

representing the rotational speed of the target in the observation plane,

—a gyrometer (63) delivering the signal $\beta$ representing the angular rotation speed of the sighting line of the antenna with respect to an absolute referential data (G).

9. A device according to claims 1 to 3, characterized in that said first (2) and second (3) filtering means comprise N temporally non-bounded pulse response filtering channels.

10. A device according to claim 9, characterized in that each filtering channel comprises an elementary filter element of the second order including two elementary cells (75—77) of the first order arranged in cascade and having a time constant 1/b wherein

$$b=\frac{2\pi\,.\,Vd\,.\,q}{\lambda Ro}$$

said cells being separated by a separating circuit, each elementary cell having a transfer function of the type

$$\frac{1}{b+p}$$

wherein $p$ represents the operator of Laplace's operation.

11. A device according to claim 10, characterized in that each elementary cell comprises a voltage/controllable variable resistor (750/770) receiving a control signal proportional to

$$b=\frac{2+Vd\,.\,a}{\lambda Ro}$$

through the intermediary of a summing device (751/771).

12. A device according to claim 10, characterized in that each elementary cell comprises a positive reaction loop comprising a summing device (80—83) and a gain attenuating circuit (82—85)

wherein $\qquad G_q=e^{-bTc}$

$$b=\frac{2\pi Vd\,.\,a}{\lambda\,.\,Ro}$$

each gain attenuating circuit receiving from a computing circuit (86) the parameter $b$.

13. A device according to claims 7 and 10, characterized in that the spacing computing means further comprise, at the output, computing means (53) for computing the ratio

$$R=\frac{\Sigma Mk\theta k}{\Sigma Mk}$$

representing the target, an inverted filter (55) allowing the time lag of the device to be reduced to a minimum, said inverted filter having a transfer function

$$F(p)=\frac{(p+b)^2}{(p+c)^2}$$

wherein $c\gg b$.

14. A device according to claims 1 to 3, characterized in that the frequency regulating means for regulating the frequency transposing means in accordance with a central frequency $fo$ representing the weighed mean value of the frequencies of each one of that echos comprise:

—summing means (90—91) for summing the signals delivered by said N filtering channels of the first filtering means (2) of the summing channel, said summing means delivering for each component $Xs_k$, $Ys_k$ a signal representing a summing vector of the elementary vectors delivered by the dephasing operator circuits, and components

$$X=\Sigma Xs_k, \ Y=\Sigma Ys_k$$

second component of the summing signal, said comparing means (972) delivering a control signal of the inhibition circuit for a value of the second summing signal component, which is higher than a fraction of said module $\rho$.

15. An airborne Doppler radar, comprising a device according to any one of the preceding claims.

FIG_1-a

FIG_1-b

FIG_2

# FIG_3

Vd — 71 — 72 — 731 — 73 — TC

RAZ

732

74

# FIG_4

57

MK — 51

MK.θK — 52

53 — θ̄

# FIG_5-a

# FIG_5-b

**0 026 134**

# FIG_6

# FIG_7

# FIG_8

5